# EUROPEAN PATENT SPECIFICATION

(11) **EP 2 352 924 B1**
(45) Date of publication and mention of the grant of the patent: **26.09.2012**
(21) Application number: 08875006.2
(22) Date of filing: 05.11.2008
(51) Int. Cl.: F15B 15/14

(54) **FLUID OPERATED ACTUATOR WITH A LUBRICANT RESERVOIR**
FLUIDBETÄTIGTER AKTUATOR MIT SCHMIERMITTELBEHÄLTER
ACTIONNEUR À COMMANDE HYDRAULIQUE DOTÉ D'UN RÉSERVOIR DE LUBRIFIANT

(43) Date of publication of application: 10.08.2011
(73) Proprietor: Norgren GmbH, 46519 Alpen (DE)
(72) Inventor: ENGELS, Martin, 46519 Alpen (DE); EXNER, Joachim, 47661 Issum (DE)
(74) Representative: Holmes, Matthew William
(86) International application number: PCT/EP2008/009311
(87) International publication number: WO 2010/051822

(56) References cited:
- DE-A1- 1 920 374
- JP-A- 4 290 682
- JP-A- 2000 130 450
- JP-A- 2000 274 657
- US-A- 2 211 456

## Description

### TECHNICAL FIELD

The present invention relates to a fluid operated actuator, and more particularly, to a fluid operated actuatorincluding a lubricant reservoir with a lubricant-repellant layer.

### BACKGROUND OF THE INVENTION

Fluid actuators are widely used and are capable of operating in a variety of environments. One advantage of using fluid operated actuators is that they can typically operate with a minimum amount of lubrication due to the fewer number of moving parts as compared to other types of actuators. A fluid operated actuator is typically connected to a work piece, which is influenced by movement of a pistonwhich is subjected to alternating fluid pressures. As fluid is introduced to a first side of the piston, the piston moves in a first direction. To switch directions, fluid can be introduced to a second side of the piston and exhausted from the first side. This alternating motion is transferred to a work piece in order to accomplish some task.

One problem with the reciprocating motion of the piston is friction in the areas of sealing parts. For example, a piston rod may be connected to the piston and the piston rod typically slides along a sealing member created in the housing of the cylinder to prevent fluid from escaping. Similarly, the piston forms a seal against the cylinder housing to prevent fluid from leaking from one side of the piston to the other. These sealed areas are especially susceptible to increased friction. As a result, lubricant must be applied to the piston and inner wall of the cylinder housing. Prior art approaches that attempt to apply lubricants manually have received limited success because of the constant maintenance that is required. In order to provide consistent lubrication, another prior art approach, which is disclosed in United States Patent 4,203,353 and 2211456, provides lubricant reservoirs adapted to store a predetermined amount of lubricant. While this approach has received some success, a significant portion of the lubricant is never delivered to the needed areas because it is retained within the reservoir and unable to reach the desired surfaces. Therefore, the prior art approach disclosed in the '353 patent is limited in the lifespan of the cylinder before the cylinder must be taken apart and resupplied with lubricant, or alternatively, replaced.Yet another prior art approach is disclosed in JP 04 290682. The '682 patent applies a lubricant directly to the seal. The seal includes different sized particles that create uneven surfaces. The lubricant is retained within the uneven surface. The approach can only accommodate a small amount of lubricant and thus, requires frequent replacement.

The present invention overcomes this and other problems and an advance in the art is achieved. The present invention utilizes a lubricant reservoir surface treatment that prevents the lubricant from "adhering" to the reservoir surface. Thus, excess lubricant is not wasted, but rather, substantially all of the lubricant available within the reservoir is available for delivery to the desired surfaces.

### ASPECTS

According to an aspect of the invention, an actuator including a piston movable within a cylinder housing comprises:
a first lubricant reservoir, including a lubricant, formed in the piston and in communication with the cylinder housing;
wherein the first lubricant reservoir includes a lubricant-repellant layer provided on a surface of the first lubricant reservoir and adapted to prevent the lubricant from adhering to the first lubricant reservoir.

Preferably, the lubricant in the first lubricant reservoir is provided to lubricate the cylinder housing.

Preferably, the first lubricant reservoir is sloped towards the cylinder housing.

Preferably, the actuator further comprises:
an actuator seal coupled to the cylinder housing; and
a second lubricant reservoir, including the lubricant, formed in the actuator seal and in communication with a piston rod coupled to the piston;
wherein the second lubricant reservoir includes a lubricant-repellant layer provided on a surface of the second lubricant reservoir and adapted to prevent the lubricant from adhering to the second lubricant reservoir.

Preferably, the lubricant in the second lubricant reservoir is provided to lubricate the piston rod.

Preferably, the second lubricant reservoir is sloped towards the piston rod.

### BRIEF DESCRIPTION OF THE DRAWINGS

FIG. 1 shows a fluid operated actuator according to an embodiment of the invention.
FIG. 2 shows a prior art actuator seal for a fluid operated actuator.
FIG. 3 shows a prior art actuator seal for a fluid operated actuator.
FIG. 4 shows an actuator seal for a fluid operated actuator according to an embodiment of the invention.
FIG. 5 shows an actuator seal for a fluid operated actuator according to another embodiment of the invention.
FIG. 6 shows a piston with a lubricant reservoir according to an embodiment of the invention.

### DETAILED DESCRIPTION OF THE INVENTION

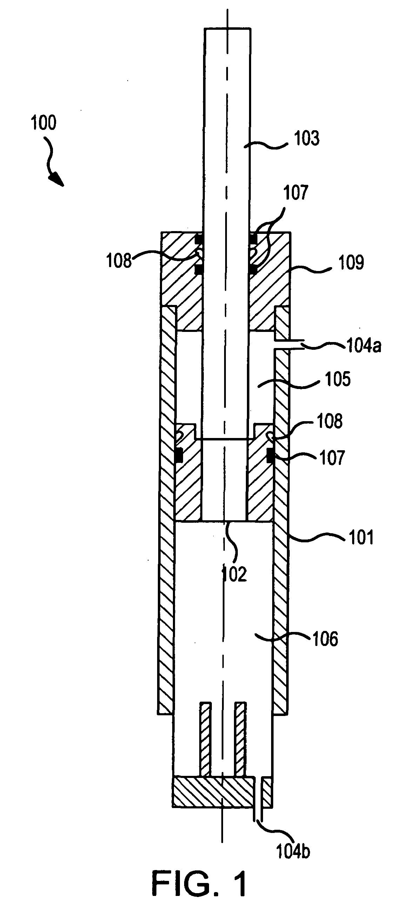

FIGS. 1 - 6 and the following description depict specific examples to teach those skilled in the art how to make and use the best mode of the invention. For the purpose of teaching inventive principles, some conventional aspects have been simplified or omitted. Those skilled in the art will appreciate variations from these examples that fall within the scope of the invention. Those skilled in the art will appreciate that the features described below can be combined in various ways to form multiple variations of the invention. As a result, the invention is not limited to the specific examples described below, but only by the claims and their equivalents.

FIG. 1 shows a fluid operated actuator 100 according to an embodiment of the invention. The fluid operated actuator 100 comprises a cylinder housing 101, a piston 102, and a piston rod 103. The piston 102 and piston rod 103 can slide within the cylinder housing 101 to convert fluid energy, in the form of pressure, to mechanical energy. The cylinder housing 101 includes fluid ports 104a and 104b. The fluid ports 104a, 104b communicate a pressurized fluid to one of the pressurized chambers 105, 106. It should be understood that the pressurized fluid may comprise a liquid or a gas and the particular fluid used is not important for the purposes of the present invention and therefore should not limit the scope of the present invention. It should also be understood that although a fluid operated actuator is shown, the present invention should not be limited to fluid operated actuators, but rather, the present invention is equally applicable to other forms of reciprocating devices. When pressurized fluid is introduced into the first pressurized chamber 105, the piston 102, and thus the piston rod 103, moves towards the bottom of the fluid operated actuator 100 as shown in FIG. 1. Similarly, when pressurized fluid is introduced into the second pressurized chamber 106, the piston 102 and the piston rod 103 move up towards the top of the fluid operated actuator 100. As the piston 102 slides within the cylinder 101, a sealing member 107 forms a substantially fluid tight seal between the piston 102 and the cylinder housing 101. In addition, a lubricant can be provided in a lubricant reservoir 108. According to an embodiment of the invention, the lubricant reservoir 108 is formed in the piston 102 and communicates with the cylinder housing 101. As the piston 102 slides within the cylinder housing 101, lubricant can be applied to the cylinder housing 101 to reduce the friction caused by the reciprocating motion.

Similarly, the fluid operated actuator 100 can include an actuator seal 109 including sealing members 107 and a lubricant reservoir 108. According to an embodiment of the invention, the actuator seal 109 seals off the first pressurized chamber 105 from the environment by forming a substantially fluid tight seal between the piston rod 103 and the sealing members 107. Therefore, pressure within the first pressurized chamber 105 does not escape to the environment when the piston rod 103 reciprocates. According to an embodiment of the invention, the lubricant reservoir 108 can be formed in the actuator seal 109 and can communicate with the piston rod 103. The lubricant reservoir 108 can be provided with a lubricant to lubricate the piston rod 103 to reduce the friction caused by the sealing members 108.

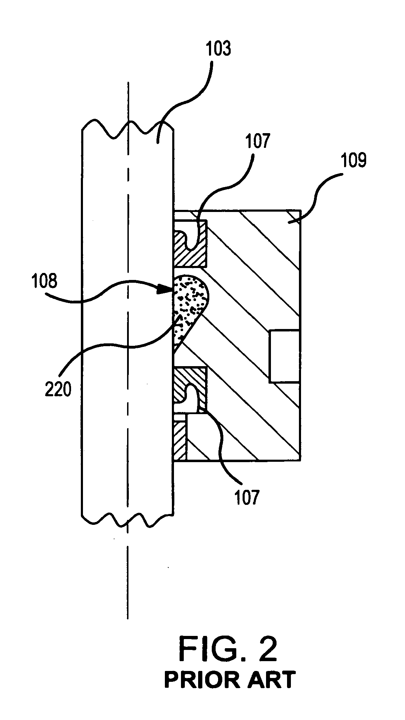

**FIG. 2** shows a prior art actuator seal 109. It should be understood that the discussion below is equally applicable to the piston 102 and the sealing member 107 and lubricant reservoir 108 associated with the piston 102. As shown, the sealing members 107 formed in the actuator seal 109 forms a substantially fluid tight seal with the piston rod 103. As shown, the lubricant reservoir 108 is provided with a lubricant 220. The lubricant 220 may comprise any manner of grease, oil, synthetic substance, water-based substance, etc. The particular lubricant used may depend on the material chosen for the piston rod 103. For example, some lubricants may interact better with certain materials and therefore can be chosen depending on the piston rod 103. In addition, the particular lubricant 220 used may depend on the seals 107. For example, certain lubricants may have a negative effect on the seals 107. The particular lubricant used should not limit the scope of the invention.

In FIG. 2, the lubricant reservoir 108 is substantially filled with the lubricant 220. This may be the case for example, prior to use of the fluid operated actuator 100. In addition, the lubricant reservoir 108 may be filled during service of the fluid operated actuator 100. With the lubricant reservoir 108 substantially filled, the lubricant 220 is easily transferred to the piston rod 103 to provide lubrication. As the fluid operated actuator 100 is operated and the piston rod 103 reciprocates with respect to the actuator seal 109, the lubricant 220 provided in the lubricant reservoir 108 is gradually transferred to the piston rod 103.

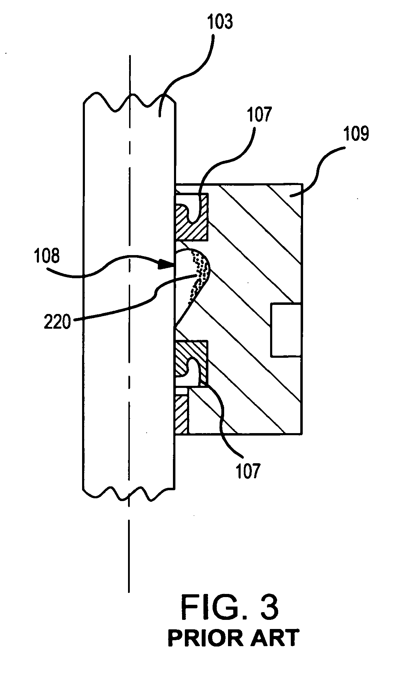

**FIG. 3** shows the actuator seal 109 according to the prior art. In FIG. 3, a portion of the lubricant 220 has already been applied to the piston rod 103. Although there is lubricant 220 remaining in the reservoir 108, it cannot be applied to the piston rod 103 because it is coated on the reservoir wall. The remaining layer of lubricant 220 is essentially wasted because it is not in contact with the piston rod 103. Therefore, the life of the fluid operated actuator 100 is substantially reduced because of the reduced lubricating ability. As result, the fluid operated actuator 100 according to the prior art will require more frequent servicing or replacement than the fluid operated actuator 100 according to the present invention.

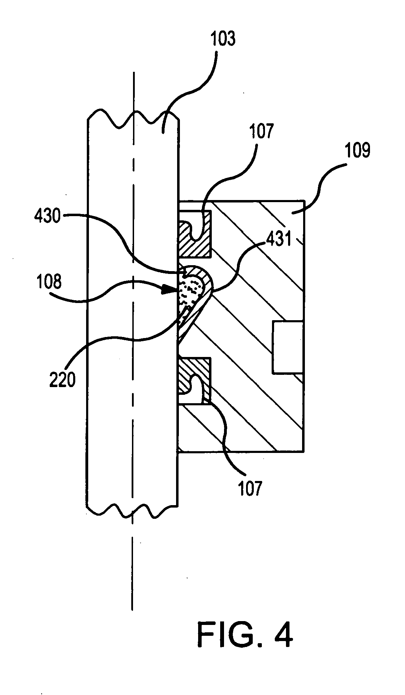

**FIG. 4** shows the actuator seal 109 according to an embodiment of the invention. The actuator seal 109 shown in FIG. 4 increases the life of the fluid operated actuator 100 by delivering substantially all of the lubricant 220 provided in the lubricant reservoir 108.

According to an embodiment of the invention, the lubricant reservoir 108 is provided with a lubricant-repellant layer 430. The thickness of the lubricant repellant layer 430 is greatly exaggerated for the purpose of illustration. It should be understood that in many embodiments, the lubricant repellant layer 430 cannot be seen by the naked eye. The lubricant-repellant layer 430 may comprise a Nano surface treatment, a thermal spray treatment, a film layer, etc. The lubricant-repellant layer 430 may comprise a polymer, a fluoro-chemical, a wax, etc. In addition, the lubricant-repellant layer 430 may be applied to the wall 431 of the lubricant reservoir 108 during or after formation of the lubricant reservoir 108. Therefore, in some embodiments, the lubricant-repellant layer 430 may actually comprise an integral portion of the lubricant reservoir 108 rather than an added coating as shown. The particular lubricant-repellant layer 430 should not be limited to the specific examples listed above as the lubricant-repellant layer 430 may depend on the lubricant chosen, which as mentioned above will typically depend on the materials used for the cylinder housing 101, the piston rod 103, and seals 107.

As can be seen in FIG. 4, the lubricant-repellant layer 430 substantially prevents the lubricant 220 from contacting the wall 431 of the lubricant reservoir 108. Therefore, the lubricant 220 is not able to adhere to the wall 431. By "adhere" it is meant that the lubricant 220 is not able to stick, bond, or otherwise remain on the wall 431. Therefore, unlike the prior art lubricant reservoir 108, the lubricant reservoir 108 of the present invention is able to utilize substantially all of the lubricant 220 provided. It should be understood that in some embodiments a small amount of lubricant 220 may adhere to the lubricant reservoir 108, however, the majority of the lubricant 220 is repelled away from the wall 431.

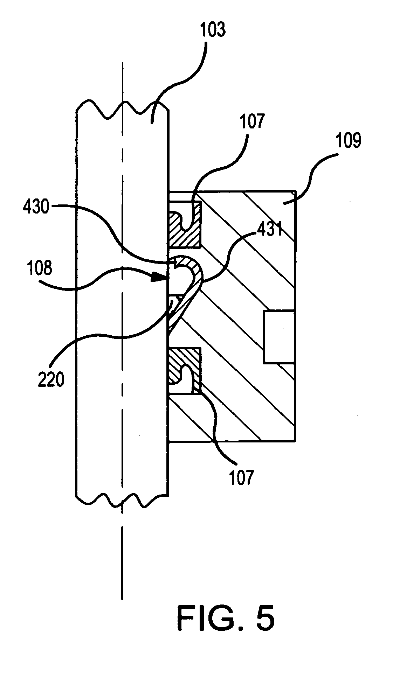

**FIG. 5** shows the actuator seal 109 with only a portion of the lubricant 220 remaining in the lubricant reservoir 108. However, unlike the prior art lubricant reservoir shown in FIG. 3 with the lubricant 220 adhering to the wall of the lubricant reservoir, the lubricant 220 of the present invention is repelled away from the wall 431 towards the piston rod 103 where it may still be utilized. This is possible because of the lubricant-repellant layer 430 provided in the lubricant reservoir 108. The lubricant-repellant layer 430 substantially prevents the lubricant 220 from adhering to the wall 431. According to an embodiment of the invention, as the lubricant 220 is provided to the surface of the piston rod 103, gravity pushes the remaining lubricant 220 towards the bottom of the reservoir 108. Because the lubricant reservoir 108 is sloped towards the piston rod 103, the lubricant 220 forms a pool against the piston rod 103. Therefore, substantially all of the lubricant 220 is available to the surface of the piston rod 103. It should be understood that the lubricant reservoir 108 can be formed to slope towards the piston rod 103 regardless of the orientation of the actuator 100. Therefore, the sloping shown in the figures should not limit the scope of the invention.

Providing the lubricant-repellant layer 430 can reduce the costs associated with operating the fluid operated actuator 100 because servicing of the actuator 100 is required less often. Furthermore, because substantially all of the lubricant 220 is available for use, less lubricant is wasted. In some fluid operated actuators it may be difficult or impractical to remove the actuator from service and resupply the lubricant reservoir 108 with lubricant. Therefore, in some actuators when the lubricant 220 is no longer being applied to the piston rod 103, the actuator must be replaced. Because more of the lubricant 220 is available to the piston rod 103, the fluid operated actuator 100 of the present invention has a longer lifespan than in the prior art. In addition, the lubricant reservoirs 108 may be formed larger and deeper than could be realized in the prior art because the concern of the lubricant adhering to the wall 431 is substantially eliminated. Therefore, the fear of wasting lubricant by providing deeper reservoirs can be reduced.

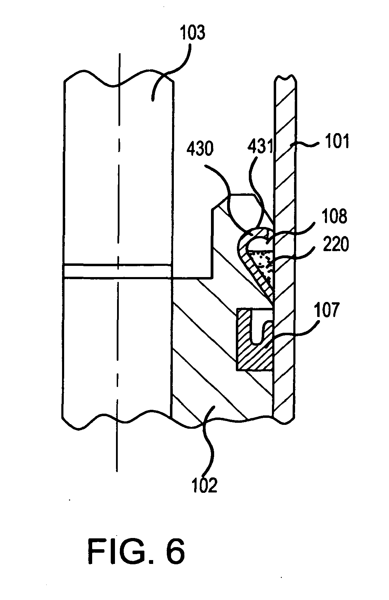

**FIG. 6** shows a portion of the piston 103 according to an embodiment of the invention. According to an embodiment of the invention, the lubricant reservoir 108 formed in the piston 102 can include the lubricant-repellant layer 431. Although only a portion of the piston 102 is shown, it should be understood that the portion not shown is substantially the same.

As shown in FIG. 6, the lubricant reservoir 108 formed in the piston 102 is approximately half-full. However, the lubricant 220 flows towards the bottom of the lubricant reservoir 108 due to the lubricant-repellant layer 430. Therefore, there is substantially no lubricant 220 in the top portion of the lubricant reservoir 108. As a result, lubricant 220 is still applied to the cylinder housing 101 as the piston 102 slides along the cylinder housing 101. As the piston 102 slides within the cylinder housing 101, the lubricant reservoir 108, which is in communication with the cylinder housing 101, is lubricated; thereby reducing the friction caused by the sealing members 107.

The invention as described above provides a lubricant reservoir 108 with a lubricant-repellant layer 430. Although the lubricant reservoirs 108 have been described as being formed in the piston 102 and the actuator seal 109, it should be understood that these are merely examples and the lubricant reservoirs 108 may be formed in numerous locations as needed by the particular implementation. Therefore, the lubricant reservoirs 108 should not be limited to being formed in the piston 102 and actuator seal 109. Furthermore, it should be understood that the actuator 100 does not need to include lubricant reservoirs 108 in both locations. It should be further understood that in embodiments where multiple lubricant reservoirs 108 are provided, the lubricant 220 may be different from one reservoir 108 to another. Therefore, each lubricant reservoir 108 may be provided with a different lubricant-repellant layer 430 as well.

The detailed descriptions of the above embodiments are not exhaustive descriptions of all embodiments contemplated by the inventors to be within the scope of the invention. Indeed, persons skilled in the art will recognize that certain elements of the above-described embodiments may variously be combined or eliminated to create further embodiments, and such further embodiments fall within the scope and teachings of the invention. It will also be apparent to those of ordinary skill in the art that the above-described embodiments may be combined in whole or in part to create additional embodiments within the scope and teachings of the invention.

Thus, although specific embodiments of, and examples for, the invention are described herein for illustrative purposes, various equivalent modifications are possible within the scope of the invention, as those skilled in the relevant art will recognize. The teachings provided herein can be applied to other lubricant reservoirs, and not just to the embodiments described above and shown in the accompanying figures. Accordingly, the scope of the invention should be determined from the following claims.

## Claims

1. An actuator (100) including a piston (102) movable within a cylinder housing (101), : wherein
a first lubricant reservoir (108), includes a lubricant (220), formed in the piston (102) and in communication with the cylinder housing (101);
**characterized by**: the first lubricant reservoir (108) including a lubricant-repellant layer (430) provided on a surface (431) of the first lubricant reservoir (108) and adapted to prevent the lubricant (220) from adhering to the first lubricant reservoir (108).

2. The actuator (100) of claim 1, wherein the lubricant (220) in the first lubricant reservoir (108) is provided to lubricate the cylinder housing (101).

3. The actuator (100) of claim 1, wherein the first lubricant reservoir (108) is sloped towards the cylinder housing (101).

4. The actuator (100) of claim 1, further comprising:
an actuator seal (109) coupled to the cylinder housing (101); and
a second lubricant reservoir (108), including the lubricant (220), formed in the actuator seal (109) and in communication with a piston rod (103) coupled to the piston (102);
wherein the second lubricant reservoir (108) includes a lubricant-repellant layer (430) provided on a surface (431) of the second lubricant reservoir (108) and adapted to prevent the lubricant (220) from adhering to the second lubricant reservoir (108).

5. The actuator (100) of claim 4, wherein the lubricant (220) in the second lubricant reservoir (108) is provided to lubricate the piston rod (103).

6. The actuator (100) of claim 4, wherein the second lubricant reservoir (108) is sloped towards the piston rod (103).

## Patentansprüche

1. Aktuator (100) mit einem Kolben (102), der in einem Zylindergehäuse (101) beweglich ist, wobei:
ein erstes Schmiermittelreservoir (108) ein Schmiermittel (220) beinhaltet, das in dem Kolben (102) und in Verbindung mit dem zylindergehäuse (101) ausgebildet ist;
**dadurch gekennzeichnet, dass** das erste Schmiermittelreservoir (108) eine schmiermittelabweisende Schicht (430) beinhaltet, die auf einer Oberfläche (431) des ersten Schmiermittelreservoirs (108) vorgesehen ist und die Aufgabe hat zu verhindern, dass das Schmiermittel (220) an dem ersten Schmiermittelreservoir (108) haftet.

2. Aktuator (100) nach Anspruch 1, wobei das Schmiermittel (220) im ersten Schmiermittelreservoir (108) zum Schmieren des zylindergehäuses (101) vorgesehen ist.

3. Aktuator (100) nach Anspruch 1, wobei das erste Schmiermittelreservoir (108) in Richtung des zylindergehäuses (101) geneigt ist.

4. Aktuator (100) nach Anspruch 1, der ferner Folgendes umfasst:
eine Aktuatordichtung (109), die mit dem zylindergehäuse (101) gekoppelt ist; und
ein zweites Schmiermittelreservoir (108), das das Schmiermittel (220) beinhaltet, das in der Aktuatordichtung (109) ausgebildet und mit einer mit dem Kolben (102) gekoppelten Kolbenstange (103) in Verbindung ist;
wobei das zweite Schmiermittelreservoir (108) eine schmiermittelabweisende Schicht (430) beinhaltet, die auf einer Oberfläche (431) des zweiten Schmiermittelreservoirs (108) vorgesehen ist und die Aufgabe hat zu verhindern, dass das Schmiermittel (220) an dem zweiten Schmiermittelreservoir (108) haftet.

5. Aktuator (100) nach Anspruch 4, wobei das Schmiermittel (220) im zweiten Schmiermittelreservoir (108) zum Schmieren der Kolbenstange (103) vorgesehen ist.

6. Aktuator (100) nach Anspruch 4, wobei das zweite Schmiermittelreservoir (108) in Richtung der Kolbenstange (103) geneigt ist.

## Revendications

1. Actionneur (100) comprenant un piston (102) pouvant être déplacé à l'intérieur d'un logement de cylindre (101), dans lequel
un premier réservoir de lubrifiant (108) contient un lubrifiant (220) et est formé dans le piston (102) et en communication avec le logement de cylindre (101) ;
**caractérisé par :**
**le fait que** le premier réservoir de lubrifiant (108) comprend une couche répulsive pour le lubrifiant (430) disposée sur une surface (431) du premier réservoir de lubrifiant (108) et adaptée pour empêcher le lubrifiant (220) d'adhérer au premier réservoir de lubrifiant (108).

2. Actionneur (100) selon la revendication 1, dans lequel le lubrifiant (220) dans le premier réservoir de lubrifiant (108) est présent pour lubrifier le logement de cylindre (101).

3. Actionneur (100) selon la revendication 1, dans lequel le premier réservoir de lubrifiant (108) est incliné vers le logement de cylindre (101).

4. Actionneur (100) selon la revendication 1, comprenant en outré :
un joint d'étanchéité d'actionneur (109) accouplé au logement de cylindre (101) ; et
un deuxième réservoir de lubrifiant (108), contenant le lubrifiant (220), formé dans le joint d'étanchéité d'actionneur (109) et en communication avec une tige de piston (103) accouplée au piston (102) ;
dans lequel le deuxième réservoir de lubrifiant (108) comprend une couche répulsive pour le lubrifiant (430) disposée sur une surface (431) du deuxième réservoir de lubrifiant (108) et adaptée pour empêcher le lubrifiant (220) d'adhérer au deuxième réservoir de lubrifiant (108).

5. Actionneur (100) selon la revendication 4, dans lequel le lubrifiant (220) dans le deuxième réservoir de lubrifiant (108) est présent pour lubrifier la tige de piston (103).

6. Actionneur (100) selon la revendication 4, dans lequel le deuxième réservoir de lubrifiant (108) est incliné vers la tige de piston (103).
